(19)

Europäisches Patentamt
European Patent Office
Office européen des brevets

(11) **EP 4 091 995 A1**

(12) **EUROPEAN PATENT APPLICATION**
published in accordance with Art. 153(4) EPC

(43) Date of publication:
**23.11.2022 Bulletin 2022/47**

(21) Application number: **21901972.6**

(22) Date of filing: **04.06.2021**

(51) International Patent Classification (IPC):
**C03B 37/027** (2006.01)      **C03B 37/012** (2006.01)
**G02B 6/02** (2006.01)

(52) Cooperative Patent Classification (CPC):
**Y02P 40/57**

(86) International application number:
**PCT/CN2021/098336**

(87) International publication number:
**WO 2022/121259 (16.06.2022 Gazette 2022/24)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.12.2020 CN 202011429117**

(71) Applicants:
• **Zhongtian Technology Fiber Potics Co., Ltd
Nantong, Jiangsu 226000 (CN)**
• **Jiangsu Zhongtian Technology Co., Ltd.
Nantong, Jiangsu 226463 (CN)**
• **Jiangdong Science and Technology Co., Ltd
Nantong, Jiangsu 226400 (CN)**

(72) Inventors:
• **ZHU, Qiansheng
Nantong, Jiangsu 226000 (CN)**

• **YE, Yang
Nantong, Jiangsu 226010 (CN)**
• **DING, Chunlai
Nantong, Jiangsu 226000 (CN)**
• **CAO, Shanshan
Nantong, Jiangsu 226000 (CN)**
• **LIU, Zhizhong
Nantong, Jiangsu 226000 (CN)**
• **XUE, Jiping
Nantong, Jiangsu 226463 (CN)**
• **XUE, Chi
Nantong, Jiangsu 226463 (CN)**

(74) Representative: **Zaboliene, Reda
Metida
Business center Vertas
Gyneju str. 16
01109 Vilnius (LT)**

(54) **OPTICAL FIBER AND PREPARATION METHOD THEREFOR**

(57)    Provided is a method for preparing an optical fiber, the method comprising the following steps: preparing a powder body mandrel; sequentially subjecting the powder body mandrel to dehydroxylation and sintering treatments to obtain a glass rod, wherein the dehydroxylation treatment comprises placing the powder body mandrel in a dehydroxylation atmosphere containing a fluorine-containing gas for dehydroxylation, and the hydroxyl content of the glass rod is less than 5 ppm; forming an outer cladding layer on the surface of the glass rod to obtain an optical fiber preform rod; drawing the fiber preform rod into a filament, and subjecting the filament to a temperature-maintained annealing treatment; and coating the surface of the filament with a resin and then performing ultraviolet curing to obtain an optical fiber. Further provided is an optical fiber prepared by using the method for preparing an optical fiber.

EP 4 091 995 A1

**Description**

The disclosure relates to a technical field of optical fiber communication, in particular to an optical fiber and preparation method therefor.

BACKGROUND

. The demand for long-distance transmission by optical fiber is always increasing. If an attenuation loss of an optical fiber is high, relay stations need to be added to enhance signal in the process of long-distance communication transmission, which increases the cost. Therefore, optical fibers with smaller attenuation loss are desirable.

SUMMARY

In view of the above, an optical fiber and preparation method thereof that can reduce above problem.

A preparation method of optical fiber includes following steps: preparing a powder body mandrel; dehydroxylating and sintering of the powder body mandrel in sequence to obtain a glass rod, wherein the dehydroxylation treatment includes placing the powder body mandrel in a dehydroxylation atmosphere including fluorine-containing gas for dehydroxylation treatment, a hydroxyl (-oh) content of the glass rod is less than 5ppm; forming an outer layer on a surface of the glass rod to obtain an optical fiber preform; drawing the optical fiber preform into a filament, and subjecting the filament to thermal insulation annealing treatment; coating the filament with resin, and curing the filament with UV to obtain a working optical fiber.

In an optional embodiment, the fluorine-containing gas comprises at least one of $SiF_4$, $CF_4$, and $C_2F_6$.

In an optional embodiment, the dehydroxylation atmosphere further includes a carrier gas, the carrier gas includes at least one of $N_2$, He and Ar, and a volume ratio of the fluorine-containing gas to the carrier gas is 1: (9 ~ 35).

In an optional embodiment, the preparation method of the optical fiber further includes step of screening the filament after thermal annealing at a screening strain of 2%.

In an optional embodiment, during the drawing process, a value of tension in the drawing stage does not fluctuate by more than 0.5%.

In an optional embodiment, the optical fiber preform is drawn into filament in a drawing furnace, air inlets are respectively arranged at a furnace mouth, a center of a furnace shell, and a bottom of the drawing furnace. During the drawing process, inert gas is introduced into the drawing furnace through the air inlets, so there is a consistent and stable thermal field in all parts of the drawing furnace.

In an optional embodiment, a total flow of inert gas in the drawing furnace is maintained at 10~50L, and a flow ratio of inert gas introduced at the furnace mouth, the center of the furnace shell, and the bottom of the drawing furnace is (1~3): (1~2.5): 1.

In an optional embodiment, the filament is thermally insulated and annealed in a holding furnace, a temperature of the holding furnace meets the following formula:

$$In(\frac{T_{out} - T_\infty}{T_{in} - T_\infty}) = -\frac{4h}{pC_pD} \cdot \frac{L}{v} = K \cdot \frac{L}{v}$$

, wherein $T_{in}$ is a temperature when the filament enters the holding furnace, $T_{out}$ is a temperature when the filament leaves the holding furnace, $T\infty$ is an ambient temperature, K is a thermal conductivity, L is a moving distance of the filament, and V is a drawing speed.

In an optional embodiment, the resin is acrylic resin or silicone resin.

The present disclosure also provides an optical fiber prepared by the method. An attenuation coefficient of the optical fiber at 1310nm wavelength is 0.33db/km, and an attenuation coefficient of the optical fiber at 1383nm wavelength is 0.28db/km.

In the preparation method of the optical fiber provided by the embodiment of the disclosure, the hydroxyl content of the glass rod is less than 5ppm through the dehydroxylation treatment; by controlling the drawing tension to keep it at a suitable stable value, the formation of Si-O-H in the drawing process is controlled, so as to reduce the content of hydroxyl in the optical fiber, and so reduce the attenuation coefficient of the optical fiber. Additionally, the cooling rate of the filament after drawing is reduced by thermal annealing of the filament, and then the imaginary temperature $T_f$ is reduced so as to reduce the attenuation coefficient. Through thermal annealing, internal stresses of the optical fiber are completely relieved, the uniformity of the internal structure of the optical fiber is improved, and Rayleigh scattering is reduced to reduce the attenuation coefficient.

DETAILED DESCRIPTION

Many specific details are described in the following description to facilitate a full understanding of the embodiments of the present disclosure. The described embodiments are only part of the embodiments of the present disclosure, not all of the embodiments of the present disclosure. Based on the embodiments of the present disclosure, all other embodiments obtained by those skilled in the art without creative work belong to the protection scope of the embodiments of the disclosure.

An embodiment of the disclosure provides a method of preparing optical fiber, which includes the following steps: Step S1: prepare powder body mandrel.

The powder body mandrel includes a core layer and an inner cladding mainly composed of silica. The inner cladding is a sinking structure of a cladding refractive index. In this embodiment, the core layer is made by axial vapor deposition process, and the inner cladding is made by an improved chemical vapor deposition process.

Step S2: dehydroxylating and sintering the powder body mandrel in sequence to obtain a glass rod. The dehydroxylating treatment includes placing the powder body mandrel in a dehydroxylation atmosphere including fluorine-containing gas for dehydroxylation treatment. A hydroxyl (-oh) content of the glass rod is less than 5ppm.

The fluorine-containing gas comprises at least one of $SiF_4$, $CF_4$, and $C_2F_6$. The dehydroxylation atmosphere also includes a carrier gas, the carrier gas includes at least one of $N_2$,

He, and Ar. A volume ratio of the fluorine-containing gas and the carrier gas is 1: (9 ~ 35). During the dehydroxylating treatment, temperature is controlled at 300~1300 °C, the fluorine-containing gas and carrier gas are introduced according to a preset flow ratio to form a dehydroxylation atmosphere, and a treatment time is controlled at 1~40 hours.

Step S3: forming an outer coating on the surface of the glass rod to obtain an optical fiber preform.

Specifically, an outer layer can be formed on the surface of the glass rod by an axial vapor deposition process or an external vapor deposition process, and then a transparent optical fiber preform is obtained by sintering. In this embodiment, the outer layer is prepared by an external vapor deposition process. The deposition process places the glass rod on an external vapor deposition machine for deposition. When the glass rod reaches a target weight or a target rod diameter, the deposition process is completed, and the glass rod is then sintered. Thereby, the powder rod is made into a transparent glass rod, that is, the optical fiber preform is prepared. In other embodiments, the outer layer may also be prepared by melting and shrinking a high-purity quartz sleeve .

Step S4: drawing the optical fiber preform into a filament, and subjecting the filament to a thermal annealing treatment.

A drawing tension is applied according to process parameters of the whole preparation method, drawing power, and other data, the drawing tension is maintained at an appropriate stable value $F_0$. In the process of drawing, the drawing tension should not be too small, otherwise it will aggravate the formation of Si-O-H in the optical fiber. The drawing tension should not be too large, excessive tension will aggravate non-homogeneity of internal structure of the optical fiber and increase Rayleigh scattering. Therefore, the tension value $F_0$ corresponds to the minimum attenuation coefficient of the optical fiber. In the process of drawing, the tension value of drawing does not fluctuate by more than 0.5%, so that the tension in the process of drawing is as stable as possible.

In other embodiments of the present disclosure, the drawing tension is determined by adjusting various process parameters in the drawing process (including the drawing speed, the temperature of the drawing furnace, the coating pressure when coating the resin on the surface of the filament, the power of the curing furnace when curing the resin coated on the surface of the filament, etc.), so that the prepared optical fiber meets the following parameters: the attenuation coefficient at the wavelength of 1310nm is 0.325~0.335dB/km, the attenuation coefficient at 1383nm wavelength is 0.275~0.285dB/km, the cut-off wavelength of the optical cable is 1200~1250nm, and the losses in flexing of the optical fiber meet the ITU-T G.657B3 standard. The drawing tension value is set at this time to the preset drawing tension value $F_0$. In other embodiments, a lower limit of drawing tension value is 0.995g, and the upper limit of tension value is 1.005g.

The control of drawing tension can be achieved by controlling a temperature in a fiber drawing furnace and a speed of fiber drawing. In order to ensure the stability of the environment in the fiber drawing furnace and meet the requirements of 2% screening strain of optical fiber, the instant method controls the speed of fiber drawing to control the drawing tension. Specifically, when the drawing tension goes down to the lower limit of 0.995g, the drawing speed is controlled to be increased. On the contrary, when the drawing tension increases to the upper limit of 1.005g, the drawing speed is reduced. When adjusting the speed of fiber drawing, changing of the speed of fiber drawing per second should not be higher than 1m/min.

Specifically, step S4 includes: sending the optical fiber preform into a fiber drawing furnace for melting and drawing into filament, and sending the filament into a holding furnace for thermal insulation annealing treatment. In the process of drawing, inert gas is introduced into the fiber drawing furnace in the way of multi-channel air inlet, so that the thermal field in the fiber drawing furnace is consistent and stable, so as to reduce internal stress of the optical fiber caused by the uneven thermal field during the melting process of the optical fiber preform. The inert gas is helium, argon, or a mixture of the two in any proportion. In a specific embodiment, a three-way air inlet mode is adopted, and the three air inlets are located at the mouth of the fiber drawing furnace, the center of the shell of the fiber drawing furnace, and the bottom of the fiber drawing furnace respectively. The total flow of inert gas in the fiber drawing furnace is maintained at 10~50L, and the flow ratio of inert gas at the mouth of the fiber drawing furnace, the center of the shell of the fiber drawing furnace, and the bottom of the fiber drawing furnace is (1~3): (1~2.5): 1.

After the filament is formed in the fiber drawing furnace, the filament gradually cools from a furnace temperature to a room temperature. A glass viscosity of the filament changes from low to high. In this process, a hypothetical temperature $T_f$ of the filament has a critical impact on the attenuation of the optical fiber. The hypothetical temperature $T_f$ is defined as a temperature at which the glass changes from a softened state to a condensed state. The value of $T_f$ represents a degree of annealing of the filament during the cooling process. The lower the value of Tf, the more complete the annealing, the lower the Rayleigh scattering coefficient caused by molecular and atomic rearrangement, and the closer the attenuation coefficient is to a theoretical limit value. In the drawing process, the hypothetical temperature $T_f$

$$\frac{1}{T_f} = \frac{1}{T_g} + a_1 In\left(1 - \frac{In\frac{q}{q_0}}{a_2}\right)$$

is affected by a cooling rate of the filament, which satisfies the formula: , where $a_1$ and $a_2$ are constants related to the material of the optical fiber, q is the cooling rate (in k/s), $q_0$=1k/s, and $T_g$ is a glass transition temperature. According to the above formula, reducing the cooling rate is an effective way to reduce the hypothetical temperature. In the disclosure, the cooling speed of the filament is reduced by the thermal insulation annealing treatment.

The holding furnace is positioned at the bottom of the drawing furnace. The filament from the drawing furnace directly enters the holding furnace for thermal insulation annealing treatment. A temperature of the holding furnace meets

$$In(\frac{T_{out} - T_\infty}{T_{in} - T_\infty}) = -\frac{4h}{pC_pD} \cdot \frac{L}{v} = K \cdot \frac{L}{v}$$

the formula: , where $T_{in}$ is a temperature when the filament enters the holding furnace, $T_{out}$ is a temperature when the filament leaves the holding furnace, $T_\infty$ is an ambient temperature, K is a thermal conductivity, L is a moving distance of the filament, and v is a drawing speed. Under certain fiber drawing conditions, L and v are known, the ambient temperature is constant, K is a fixed value, and $T_{in}$ is known, so the temperature of $T_{out}$ can be calculated and set. According to the above formula, setting a holding furnace at temperature tx and determining a certain length Lx of temperature zone ensures the complete relief of internal stress of the filament during the thermal insulation annealing process, improves the uniformity of the internal structure of the optical fiber, and reduces Rayleigh scattering.

Step S5: coating resin on the surface of the filament, and then curing to obtain the optical fiber. The Young's modulus of the resin is less than 0.7MPa. The cured resin is configured as the coating of optical fiber to protect the optical fiber, reduce structural defects produced in the drawing process, and reduce transmission attenuation of optical fiber.

The resin is acrylic resin or silicone resin. The viscosity of the acrylic resin is 2000-5000cps, and the viscosity of the silicone resin is 3000-8000cps. The viscosity of the acrylic resin or silicone resin should not be too low, which will lead to sagging of the coating and poor curing effect. The viscosity of the acrylic resin or silicone resin should not be too high either. If the viscosity of the resin is too high, the fluidity of the resin is poor, and the resin needs to be heated during coating process. However, a heating temperature of resin cannot be too high, otherwise the resin or optical fiber may be damaged. If the resin is coated under a high viscosity, adhesion of the resin is poor, and curing time is long, and it is easy to produce internal stress after curing, which is not conducive to the performance of the optical fiber, higher attenuation characteristics will be the result.

In some embodiments, the coating layer includes an inner coating and an outer coating on the inner coating. The material of inner coating meets the following requirements: elastic modulus $\leq$ 0.7MPa; at a temperature of 25 °C, the viscosity of the coating is 3500 ~ 7500mPa●s, the density is 0.95 ~ 1.3 g/cm$^3$, and the elongation at break is $\geq$ 140%. The material of the outer coating meets the following requirements: elastic modulus $\geq$ 550MPa; at a temperature of 25 °C, the viscosity of the coating is 3500 ~ 7500mPa●s, the density is 0.95 ~ 1.3 g/cm3, and the elongation at breaking point is $\geq$ 5%. The diameter of the optical fiber after forming the inner coating is 180~200 $\mu$ m. The diameter of optical fiber after forming the outer coating is 235~255 $\mu$ m. A thickness ratio of the inner coating and the outer coating is (1:0.67) - (1:1.15). An instant viscosity of the materials of the inner coating and the outer coating is 1500~3000mPa●s during coating process, and the temperature for applying the inner and outer coatings is 28~60 °C.

By the curing process, the inner coating material and outer coating material can be transformed from liquid to solid. Good curing effect can effectively improve the strength of optical fiber. Specifically, the optical fiber whose surface is coated with inner coating or outer coating is UV-cured or LED-cured through a curing furnace, wherein an inert gas is introduced into the curing furnace for oxygen isolation, and an oxygen content in the curing furnace is less than 50ppm.

In other embodiments, the inert gas is helium, argon, or a mixture of the two in any proportion. In some embodiments, the number of curing furnaces is 4-8, and the total gas flow in each curing furnace is 10-25L. After curing process, a curing degree of the inner coating is 85% - 95%, and a curing degree of the outer coating is 92% - 100%.

In a specific embodiment, the preparation method also includes the following steps:

Step S41: after step S4 and before step S5, the filament treated by thermal insulation annealing is screened with 2% screening strain to improve the strength of the prepared optical fiber.

Step S6: after the optical fiber is formed, the optical fiber is wound on an optical fiber plate by an automatic take-up device.

The optical fiber prepared by the above preparation method includes, from inside to outside, a core, an inner cladding layer, an outer cladding layer, and a coating layer. The coating layer includes an acrylic resin coating layer or a silicone resin coating layer. The optical fiber is a single-mode optical fiber or a multi-mode optical fiber. The optical fiber performance test results are shown in Tables 1-9 below.

**Table 1**

| Attenuation coefficient | |
| --- | --- |
| Wavelength (nm) | Attenuation coefficient (dB/km ) |
| 1310nm | 0.33±0.01 |
| 1383nm | 0.28±0.01 |
| 1550nm | 0.19±0.01 |
| 1625nm | 0.20±0.01 |

**Table 2**

| Dispersion | |
| --- | --- |
| Zero dispersion wavelength (nm) | Zero dispersion slope [ps/(nm·km)] |
| 1319.2 | 0.085 |
| 1318.4 | 0.085 |
| 1316.8 | 0.084 |

**Table 3**

| Optical transmission performance | |
| --- | --- |
| Optical cable cut-off wavelength | ≤1240nm |
| Polarization Mode Dispersion | $\leq 0.032 \text{ ps}/\sqrt{km}$ |

**Table 4**

| Macrobending loss | | | |
| --- | --- | --- | --- |
| Radius(mm) | Number of turns | Wavelength (nm) | Attenuation |
| 20 | 1 | 1550 | ≤0.006 |
| 20 | 1 | 1625 | ≤0.015 |
| 15 | 1 | 1550 | ≤0.022 |
| 15 | 1 | 1625 | ≤0.046 |
| 10 | 1 | 1550 | ≤0.096 |

(continued)

| Macrobending loss | | | |
|---|---|---|---|
| Radius(mm) | Number of turns | Wavelength (nm) | Attenuation |
| 10 | 1 | 1625 | ≤0.226 |

**Table 5**

| Mode Field Diameter | |
|---|---|
| Wavelength (nm) | Mode Field Diameter (μm) |
| 1310nm | 8.5±0.1 |

**Table 6**

| Geometric Features | |
|---|---|
| Cladding diameter | 125+0.5μm |
| Core/cladding concentricity | ≤0.15μm |
| Cladding out-of-roundness | ≤0.3μm |
| Coating diameter | 242±0.5μm |
| Cladding/coating concentricity | ≤5μm |

**Table 7**

| Mode Field Diameter | |
|---|---|
| Wavelength (nm) | Mode Field Diameter (μm) |
| 1310nm | 8.5±0.1 |

**Table 8**

| Mechanical performance | |
|---|---|
| Anti-fatigue parameter Nd | 23±1 |

**Table 9**

| Environmental performance | |
|---|---|
| Additional attenuation of temperature cycle (-60°C~+85°C) @1310nm, 1550nm, 1625 nm | ≤0.009 dB/km |
| Damp heat aging (+85±2°C, 85%RH, 30 days) @1310nm, 1550nm, 1625 nm | ≤0.006 dB/km |
| High temperature aging (85±2°C, 30 days ) @1310nm, 1550 nm, 1625 nm | ≤0.003 dB/km |
| Water immersion additional attenuation (23±2°C, 30 days) @1310nm, 1550 nm, 1625 nm | ≤0.012 dB/km |

It can be seen from the above that the attenuation coefficient of the optical fiber of the disclosure reaches 0.33db/km at 1310nm wavelength and 0.28db/km at 1383nm wavelength. The optical fiber meets the 2% screening strain requirement, so that the optical fiber is suitable for long-distance transmission in harsh environments. Additionally, the mode field diameter of the optical fiber is 8.5 μ m, so that the optical fiber can be incorporated into a trunk line for signal transmission.

In the preparation method of the optical fiber of the disclosure, the hydroxyl content of the glass rod is less than 5ppm through the dehydroxylation treatment. By controlling the drawing tension at a suitable and stable value, the formation of Si-O-H in the drawing process is controlled, so as to reduce the content of hydroxyl in the optical fiber, and reduce the attenuation coefficient of the optical fiber. Additionally, the cooling rate of the filament after drawing is reduced by thermal insulation annealing of the filament, and then the imaginary temperature $T_f$ is reduced to lower the attenuation coefficient of the optical fiber. Through thermal insulation annealing, internal stresses of the optical fiber are completely relieved, the uniformity of the internal structure of the optical fiber is improved, and Rayleigh scattering is reduced to further decrease the attenuation coefficient of the optical fiber. Moreover, the resin coated on the fiber can reduce the structural defects caused by the fiber drawing process, thereby further reducing the attenuation coefficient of the optical fiber.

It should be noted that the above embodiments are only used to illustrate specific aspect of the present disclosure, and are not limitations. Those skilled in the art will appreciate that the instant disclosure can be technically modified and can accept equivalent substitutions without departing from the spirit and scope of the claims.

**Claims**

1. A preparation method of optical fiber, **characterized in that**, comprising following steps:

    preparing powder body mandrel;
    dehydroxylating and sintering the powder body mandrel in sequence to obtain a glass rod, wherein the dehydroxylation treatment comprises placing the powder body mandrel in a dehydroxylation atmosphere comprising fluorine-containing gas for dehydroxylation treatment, a hydroxyl content of the glass rod is less than 5ppm;
    forming an outer layer on a surface of the glass rod to obtain an optical fiber preform;
    drawing the optical fiber preform into a filament, and subjecting the filament to thermal insulation annealing treatment;
    coating the filament with resin, and curing the filament with UV to obtain an optical fiber.

2. The preparation method of optical fiber as claimed in claim 1, **characterized in that**, the fluorine-containing gas comprises at least one of $SiF_4$, $CF_4$, and $C_2F_6$.

3. The preparation method of optical fiber as claimed in claim 1, **characterized in that**, the dehydroxylation atmosphere further comprises a carrier gas, the carrier gas comprises at least one of $N_2$, He, and Ar, and a volume ratio of the fluorine-containing gas to the carrier gas is 1: (9 ~ 35).

4. The preparation method of optical fiber as claimed in claim 1, **characterized in that**, further comprises step of screening the heat preservation annealed filaments with a screening strain of 2%.

5. The preparation method of optical fiber as claimed in claim 1, **characterized in that**, during the drawing process, a value of tension in the drawing stage dose not fluctuate by more than 0.5%.

6. The preparation method of optical fiber as claimed in claim 1, **characterized in that**, the optical fiber preform is drawn into filament in a drawing furnace, air inlets are respectively arranged at a furnace mouth, a center of a furnace shell, and a bottom of the drawing furnace, during the drawing process, inert gas is introduced into the drawing furnace through the air inlets, so there is a consistent and stable thermal field in parts of the drawing furnace.

7. The preparation method of optical fiber as claimed in claim 6, **characterized in that**, a total flow of inert gas in the drawing furnace is maintained at 10~50L, a flow ratio of inert gas introduced at the furnace mouth, the center of the furnace shell, and the bottom is (1~3): (1~2.5): 1.

8. The preparation method of optical fiber as claimed in claim 1, **characterized in that**, the filament is thermally insulated and annealed in a holding furnace, a temperature of the holding furnace meets the formula:

$$In(\frac{T_{out} - T_\infty}{T_{in} - T_\infty}) = -\frac{4h}{pC_pD} \cdot \frac{L}{v} = K \cdot \frac{L}{v}$$

, wherein $T_{in}$ is a temperature when the filament enters the holding furnace, $T_{out}$ is a temperature when the filament leaves the holding furnace, $T_\infty$ is an ambient temperature, K is a thermal conductivity, L is a moving distance of the filament, and V is a drawing speed.

9. The preparation method of optical fiber as claimed in claim 1, **characterized in that**, the resin is acrylic resin or silicone resin.

10. An optical fiber, **characterized in that**, the optical fiber is prepared by the preparation method in any one of claims 1-9, and the attenuation coefficient of the optical fiber at 1310nm wavelength is 0.33db/km, and the attenuation coefficient at 1383nm wavelength is 0.28db/km.

## INTERNATIONAL SEARCH REPORT

| International application No. |
| --- |
| **PCT/CN2021/098336** |

| A. | CLASSIFICATION OF SUBJECT MATTER |
| --- | --- |

C03B 37/027(2006.01)i; C03B 37/012(2006.01)i; G02B 6/02(2006.01)i

According to International Patent Classification (IPC) or to both national classification and IPC

| B. | FIELDS SEARCHED |
| --- | --- |

Minimum documentation searched (classification system followed by classification symbols)

C03B; G02B

Documentation searched other than minimum documentation to the extent that such documents are included in the fields searched

Electronic data base consulted during the international search (name of data base and, where practicable, search terms used)

EPTXT; USTXT; WOTXT; CNABS; CNTXT; VEN; CNKI; Web of science: 氟, 羟基, 脱水, 张应力, 张力, 不变, 拉, 恒定, 进气口, 衰减, 损耗, 光纤, 脱羟, 保持, 芯棒, 芯层, 光学纤维, OH, 退火, 烧结, 预制, 热场, 包层, 进气, 烟炱, 粉体, 粉末, 疏松体, 保温, 拉丝炉, 树脂, 中天科技, 江东科技, 朱钱生, 叶阳, 丁春来, 曹珊珊, 刘志忠, 薛济萍, 薛驰, optical fibre?, optical fiber?, loose+, soot, powder, low-loss, draw+, fluor+, anneal+, F, preform, sinter+, vitrif+, clad+, +hydroxyl+, tension

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 112499961 A (ZHONGTIAN TECHNOLOGY OPTICAL FIBER CO., LTD. et al.) 16 March 2021 (2021-03-16)<br>claims 1-10 | 1-10 |
| Y | CN 111929764 A (ZHONGTIAN TECHNOLOGY OPTICAL FIBER CO., LTD. et al.) 13 November 2020 (2020-11-13)<br>description, paragraphs 55-74 | 1-10 |
| Y | CN 211078920 U (ZHONGTIAN TECHNOLOGY PRECISION MATERIALS CO., LTD. et al.) 24 July 2020 (2020-07-24)<br>description, paragraphs 73-97 | 1-10 |
| Y | EP 1270522 A1 (FITEL USA CORP) 02 January 2003 (2003-01-02)<br>description paragraphs 6, 10, 15-35 | 1-10 |
| Y | CN 110040942 A (ZHONGTIAN TECHNOLOGY GROUP CO., LTD.) 23 July 2019 (2019-07-23)<br>description, paragraphs 3-24 | 1-10 |

☑ Further documents are listed in the continuation of Box C.  ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **16 July 2021** | **23 August 2021** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/098336**

**C. DOCUMENTS CONSIDERED TO BE RELEVANT**

| Category* | Citation of document, with indication, where appropriate, of the relevant passages | Relevant to claim No. |
|---|---|---|
| Y | CN 106116138 A (ZHONGTIAN TECHNOLOGIES FIBER OPTICS CO., LTD.) 16 November 2016 (2016-11-16)<br>     description, paragraphs 5-12 | 1-10 |
| Y | CN 111348826 A (SHANGHAI YUZHI TECHNOLOGY CO., LTD.) 30 June 2020 (2020-06-30)<br>     description, paragraphs 47-57, and figures 1-3 | 6-7, 10 |
| A | 张森 (ZHANG, Sen). "光纤张力对光纤性能的影响及控制 (Non-official translation: Influence and Control of Optical Fiber Tension over Optical Fiber Performance)"<br>*光纤光缆制备 第1版 ISBN:978-7-5606-2601-7 西安电子科技大学出版社 (Non-official translation: Optical Fiber Cables Preparation, 1st Edition, ISBN: 978-7-5606-2601-7, Xidian University Press)*, 31 August 2011 (2011-08-31),<br>     pp. 46-49 | 5 |

Form PCT/ISA/210 (second sheet) (January 2015)

**INTERNATIONAL SEARCH REPORT**
Information on patent family members

International application No.

**PCT/CN2021/098336**

| Patent document cited in search report | | | Publication date (day/month/year) | Patent family member(s) | | | Publication date (day/month/year) |
|---|---|---|---|---|---|---|---|
| CN | 112499961 | A | 16 March 2021 | None | | | |
| CN | 111929764 | A | 13 November 2020 | None | | | |
| CN | 211078920 | U | 24 July 2020 | None | | | |
| EP | 1270522 | A1 | 02 January 2003 | JP | 2003026436 | A | 29 January 2003 |
| | | | | KR | 20030003018 | A | 09 January 2003 |
| | | | | KR | 878709 | B1 | 14 January 2009 |
| | | | | DE | 60200189 | D1 | 04 March 2004 |
| | | | | US | 2002197005 | A1 | 26 December 2002 |
| | | | | EP | 1270522 | B1 | 28 January 2004 |
| | | | | DE | 60200189 | T2 | 25 November 2004 |
| CN | 110040942 | A | 23 July 2019 | None | | | |
| CN | 106116138 | A | 16 November 2016 | None | | | |
| CN | 111348826 | A | 30 June 2020 | None | | | |

Form PCT/ISA/210 (patent family annex) (January 2015)